Europäisches Patentamt

European Patent Office

Office européen des brevets

(11) Veröffentlichungsnummer : **0 384 153 B1**

## EUROPÄISCHE PATENTSCHRIFT

(45) Veröffentlichungstag der Patentschrift :
09.06.93 Patentblatt 93/23

(51) Int. Cl.$^5$ : **F16G 13/16**

(21) Anmeldenummer : **90101562.8**

(22) Anmeldetag : **26.01.90**

(54) **Energieführungskette.**

(30) Priorität : **18.02.89 DE 8901955 U**

(43) Veröffentlichungstag der Anmeldung :
**29.08.90 Patentblatt 90/35**

(45) Bekanntmachung des Hinweises auf die
Patenterteilung :
**09.06.93 Patentblatt 93/23**

(84) Benannte Vertragsstaaten :
**AT CH DE ES FR GB IT LI NL SE**

(56) Entgegenhaltungen :
**EP-A- 0 161 417
EP-A- 0 308 958
DE-A- 1 932 428
DE-A- 2 255 283
DE-A- 2 417 353
DE-A- 3 531 066
DE-C- 3 730 586
DE-C- 3 814 995
DE-U- 8 901 955
FR-A- 2 210 739**

(73) Patentinhaber : **Kabelschlepp Gesellschaft mit
beschränkter Haftung
Marienborner Strasse 75
W-5900 Siegen 1 (DE)**

(72) Erfinder : **Wehler, Herbert
Heinrichsglücker Weg
W-5908 Neunkirchen (DE)**
Erfinder : **Moritz, Werner
Wetzlarer Strasse 122
W-5900 Siegen (DE)**
Erfinder : **Jud, Volker
Haroldweg 15
W-5901 Wilnsdorf (DE)**
Erfinder : **Mack, Paul-Werner
Heinrich Lübke Strasse 14
W-5963 Wenden (DE)**
Erfinder : **Weber, Willibald
An der Netphe 81
W-5902 Netphen (DE)**
Erfinder : **Wisser, Georg
Ringstrasse 7
W-5239 Luckenbach (DE)**

(74) Vertreter : **Stenger, Watzke & Ring
Patentanwälte
Kaiser-Friedrich-Ring 70
W-4000 Düsseldorf 11 (DE)**

EP 0 384 153 B1

## Beschreibung

Die Erfindung betrifft eine Energieführungskette für die Zufuhr von Verbrauchsmitteln aller Art zu auf Bahnen bewegten Aggregaten, wobei eine tragende Gliederkette aus einer Vielzahl von Kettengliedern durchgehende Innenräume für Energieleiter aufweist, gelenkig miteinander verbundene Außenlaschen der Gliederkette Anschläge zur Begrenzung des gegenseitigen Schwenkwinkels haben und jedes Kettenglied zwei lösbare, die Außenlaschen miteinander verbindende als Rohrstücke ausgebildete Stege aufweist.

Aus der DE-C-19 32 428 ist bereits eine Energieführungskette bekanntgeworden, bei der jeweils die Kettenlaschen der Kettenglieder durch einen Steg einteilig miteinander verbunden sind, wobei der Steg eine Öffnung für die Energieleitungen aufweist. Bei dieser Energieführungskette ist die Aufnahmefähigkeit für Energieleiter von der Größe der Öffnung im Steg begrenzt. Wenn die Kapazität der Energieführungskette erschöpft ist, muß eine andere Kette mit völlig neuen Kettengliedern zur Verfügung gestellt werden, so daß bei diesem Stand der Technik der aufgrund unterschiedlicher Anforderungen beim Gebrauch gegebene Herstellungs- und Lagerungsaufwand besonders groß ist.

Aus den vorstehenden Gründen sind bereits gattungsgemäße Energieführungsketten bekanntgeworden, bei denen die Breite der Kettenglieder und somit die Breite des Energieleiter aufnehmenden Innenraumes durch Austausch oder Veränderung lösbarer Stege geändert werden kann, welche die Außenlaschen der Kettenglieder miteinander verbinden. Die DE-C-37 30 586 offenbart bereits eine gattungsgemäße Gliederkette, bei der die Stege zum lösbaren Verbinden der Außenlaschen jeweils aus einem rohrförmigen Zentralabschnitt von einstellbarer Länge und zwei mit diesem fest verbindbaren Endstücken bestehen, die mit den Außenlaschen zusammenarbeiten. Diese Konstruktion ist relativ aufwendig, weil jeder Steg von drei relativ komplizierten Einzelteilen gebildet wird, wobei die beiden Endstücke in die Enden des Zentralabschnittes einsteckbar sind, um mit diesem eine Rastverbindung zu bilden. Außerdem sind die mit den Außenlaschen verbindbaren Enden der Endstücke als aufwendige Steckteile für eine Rastverbindung ausgebildet, die zusätzlich noch eine Schraubverbindung mit den Außenlaschen haben können.

Aus der DE-C-22 55 283 ist eine Energieführungskette mit teilbaren Stegen bekannt, die aus wenigstens zwei Traversen und zwischen diesen angeordneten Trennstegen bestehen. Bei dieser Energieführungskette haben die Traversen einen abgeflachten Querschnitt mit abgerundeten Schmalseiten und in den Trennstegen sind am oberen und unteren Ende mit Hinterschneidungen versehene, angeschnittene Ausnehmungen angeordnet, so daß die Traversen nach dem Einlegen in die Ausnehmungen durch Verdrehen um ihre Längsachse kraft- und formschlüsssig mit den Trennstegen verspannbar sind.

Davon ausgehend liegt der Erfindung die Aufgabe zugrunde, eine verbesserte Energieführungskette mit lösbaren Stegen zu schaffen, bei der insbesondere die Konstruktion der Stege und deren Verbindung mit den Außenlaschen vereinfacht sind.

Zur technischen Lösung dieser Aufgabe ist vorgesehen, daß die Stege Rohrstücke sind, von denen wenigstens eines mit seinen stirnseitigen Öffnungen unter Ausbildung von Preßsitzen auf entsprechende Vorsprünge der Außenlaschen gesteckt ist.

Bei einer erfindungsgemäßen Energieführungskette werden also die Stege von Rohrstücken gebildet, deren Hohlraum zumindest in den Endbereichen einteilig an die Innenwände der Außenlaschen angeformte Vorsprünge aufnimmt. Dabei besitzen die Rohrstücke innen ein Untermaß und die Vorsprünge außen ein Übermaß, so daß beim Aufstecken ein Preßsitz, also eine feste Verbindung entsteht. Alternativ kann der Preßsitz auch durch Aufschrumpfen der Rohrstücke hergestellt werden.

Die Erfindung hat den Vorteil, daß die Stege für den jeweiligen Bedarfsfall aus handelsüblichen Rohren zugeschnitten werden können, wobei sowohl Kunststoff- als auch metallische Rohre aus Ausgangsmaterial verwendbar sind. Der Einsatz unterschiedlicher Werkzeuge, insbesondere unterschiedlicher Spritzwerkzeuge zur Herstellung variabler Stege ist also bei dieser Energieführungskette nicht erforderlich. Außerdem ist auch der konstruktive Aufwand auf der Seite der Außenlaschen der Kettenglieder gering, weil diese lediglich Vorsprünge mit einer einfachen und glatten Form aufweisen müssen. Schließlich ist auch die Montage bzw. Demontage der Kettenglieder erleichtert, weil hierzu die Rohrstücke lediglich auf die Vorsprünge gesteckt oder gepreßt bzw. von diesen abgezogen werden müssen. Mit einer einfachen Drückvorrichtung kann die Montage bzw. Demontage noch erleichtert werden.

Bei einer bevorzugten Ausgestaltung sind die Rohrstücke bei etwa konstanter Wandstärke an zwei gegenüberliegenden Außenseiten abgeflacht und an zwei weiteren gegenüberliegenden Außenseiten abgerundet, wobei der Abstand zwischen den abgeflachten Außenseiten kleiner als der Abstand zwischen den abgerundeten Außenseiten ist und sind die entsprechenden Vorsprünge mit ihren abgeflachten Außenseiten parallel zu den Längsschmalseiten der Außenlaschen angeordnet. Durch diese Ausgestaltung wird eine Energieführungskette mit einem relativ großen Innenraum für Energieleiter zur Verfügung gestellt, weil die mit ihren abgeflachten Seiten in Längsausdehnungsrichtung der Kette orientierten Rohrstücke aufgrund des relativ geringen Abstandes zwischen den abgeflachten Seiten nur einen geringen Teil der Höhe der Kettenglieder beanspruchen. Zugleich wird eine hochfeste und verwindungssteife Verbindung zwischen den Außenlaschen erreicht, insbesondere weil der relativ große Abstand zwischen den abgerundeten Außenseiten der Rohrstücke ein relativ großes Widerstandsmoment bedingt und im Bereich der abgeflachten Außenseiten eine große Kontaktfläche zwischen den Rohrstücken und den Vorsprüngen besteht.

Bei einer praktischen Ausgestaltung weist jedes Kettenglied ein Rohrstück mit einem Längsschlitz und ein ungeschlitztes Rohrstück auf, wobei die längsgeschlitzten Rohrstücke sämtlicher Kettenglieder auf nur einer Seite der Gliederkette angeordnet sind. Die geschlitzten Rohrstücke können einfach aufgeweitet und von den Vorsprüngen der Außenlaschen abgezogen werden, wodurch die Energieführungskette einseitig für ein einfaches Einlegen von Energieleitungen geöffnet werden kann. Die Außenlaschen müssen hierzu nicht auseinandergerückt werden, wie dies erforderlich ist, wenn ausschließlich ungeschlitzte Rohrstücke verwendet werden und die Vorsprünge an beiden Seiten der Gliederkette gleich lang sind. Bei eingesetzten Energieleitern dienen die längsgeschlitzten Rohrstücke der vollständig montierten Energieführungskette im wesentlichen der Führung der Energieleiter, wobei sie jedoch auch zur Stabilität der Kettenglieder beitragen. Einen größeren Beitrag zur Stabilität leisten jedoch die ungeschlitzten Rohrstücke, weil diese unter Belastung praktisch keiner Verformung unterliegen.

Bei einer Energieführungskette, deren Rohrstücke an zwei gegenüberliegenden Außenseiten abgeflacht und an zwei weiteren gegenüberliegenden Außenseiten abgerundet sind, wird der Längsschlitz bevorzugt an einer abgerundeten Seite des Rohrstückes ausgebildet, so daß die längsgeschlitzten Rohrstücke in Längsrichtung der Energieführungskette abgezogen werden können, ohne in die von den Leitungen besetzten Innenräume der Gliederkette einzudringen.

Die Energieführungskette kann auch einfach für das Einlegen von Energieleitungen geöffnet werden, wenn der Längsschlitz an einer abgeflachten Außenseite des Rohrstückes angeordnet ist und etwa deren Ausdehnung in Längsrichtung der Gliederkette aufweist. Durch die erhebliche Ausdehnung des Längsschlitzes kann das Rohrstück leicht in senkrecher Richtung zu einer Ebene durch Gelenke der gestreckten Kette auf die Vorsprünge aufgedrückt bzw. von diesen abgezogen werden. Bevorzugt werden die Rohrstücke so aufgesteckt, daß die Längsschlitze zu den Innenräumen der Gliederkette hin geöffnet sind, so daß die Rohrstücke beim Andrücken oder Abziehen nicht in die Innenräume eingebracht werden müssen. Wenn zusätzlich eine abgerundete Außenseite des Rohrstückes eine Längsnut aufweist, kann dieses mit einem in die Längsnut eingeführten Schraubendreher von den Vorsprüngen abgehebelt werden.

Bei einer praktischen Ausgestaltung sind die den längsgeschlitzten Rohrstücken zugeordneten Vorsprünge der Außenlaschen kürzer als die den ungeschlitzten Rohrstücken zugeordneten Vorsprünge, so daß der Querschnitt zum Einführen von Energieleitungen relativ groß ist, wenn die längsgeschlitzten Rohrstücke von der Gliederkette entfernt sind.

Bei einer weiteren Ausgestaltung haben die Anschlußstücke bildenden Endglieder der Gliederkette ein die Außenlaschen verbindendes Rohrstück, welches eine Befestigungszunge für eine Befestigung an einem ortsfesten Anschluß oder an einem beweglichen Verbraucher hat. Die Befestigungszungen ermöglichen eine großflächige Kraftübertragung zwischen Energieführungskette und Anschluß oder Verbraucher, welche dem gesamten Kettengewicht und den im Betrieb auftretenden dynamischen Belastungen standhält.

Eine alternative Ausführungsform der Energieführungskette zum einfachen Öffnen für das Einlagen von Energieleitungen besteht darin, daß einer der beiden als Rohrstück ausgebildeten Stege in mit Hinterschneidungen versehene, angeschnittene Ausnehmungen der Außenlaschen einsetzbar ist. Dabei können die Abmessungen zwischen den Rohrstücken und den Ausnehmungen so gewählt werden, daß die Rohrstücke nach dem Einlegen und die Ausnehmungen durch Verdrehen um ihre Längsachse kraft- und formschlüssig mit den Außenlaschen verspannbar sind. Die Verbindung zwischen dem anderen Rohrstück und den Außenlaschen bleibt bei dieser Ausführungsform unverändert.

Schließlich ist bei einer Ausgestaltung der Erfindung vorgesehen, daß die Rohrstücke aus einem Leichtmetall bestehen, so daß eine hochstabile Energieführungskette auch bei geringem Kettengewicht erreicht werden kann.

Weitere Einzelheiten und Vorteile ergeben sich aus der nachfolgenden Beschreibung der zugehörigen Zeichnungen, in denen drei bevorzugte Ausführungsformen einer erfindungsgemäßen Energieführungskette dargestellt worden sind. In den Zeichnungen zeigen:

Fig. 1     eine Energieführungskette teilweise in Seitenansicht und teilweise im Längsschnitt;

Fig. 2     ein Kettenglied derselben Energieführungskette in perspektivischem Sprengbild;

Fig. 3     ein anderes Kettenglied, bei dem die Lage eines längsgeschlitzten und eines ungeschlitzten Rohrstückes sowie der zugeordneten Vorsprünge gegenüber dem in der Fig. 2 Gezeigten vertauscht sind in perspektivischem Sprengbild;

Fig. 4     Kettenglied gemäß Fig. 3, wobei das längsgeschlitzte Rohrstück zum Einlegen von Energieleitungen abgezogen ist in perspektivischer Ansicht;

Fig. 5    dasselbe Kettenglied mit aufgeschobenem längsgeschlitzten Rohrstück in perspektivischer Ansicht;

Fig. 6    Kettenglied einer anderen Energieführungskette, bei der ein Längsschlitz auf einer abgeflachten Außenseite eines Rohrstückes angeordnet ist mit abgezogenem längsgeschlitzten Rohrstück in perspektivischer Ansicht;

Fig. 7    Anschlußstück der Energieführungskette gemäß Fig. 1 für eine Befestigung an einem ortsfesten Anschluß in perspektivischem Sprengbild;

Fig. 8    Anschlußstück der Energieführungskette gemäß Fig. 1 für eine Befestigung an einem beweglichen Verbraucher in perspektivischem Sprengbild;

Fig. 9    ein Kettenglied mit einer alternativen Befestigung für das Rohrstück in Ausnehmungen der Außenlaschen in perspektivischem Sprengbild;

Fig. 10   das Kettenglied gemäß Fig. 9 mit eingesetztem Rohrstück in perspektivischer Darstellung;

Fig. 11   ein Kettenglied gemäß Fig. 10 mit teilweise in die Ausnehmung eingesetztem Rohrstück im Längsschnitt;

Fig. 12   das Kettenglied gemäß Fig. 11 mit vollständig eingesetztem Rohrstück und einem aufgesteckten Werkzeug im Längsschnitt.

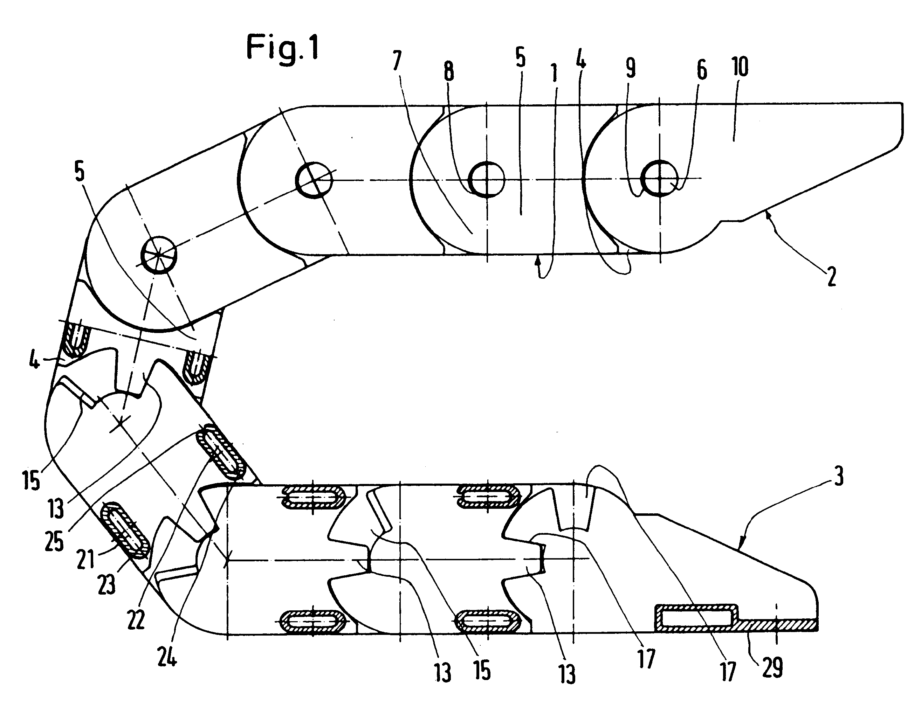

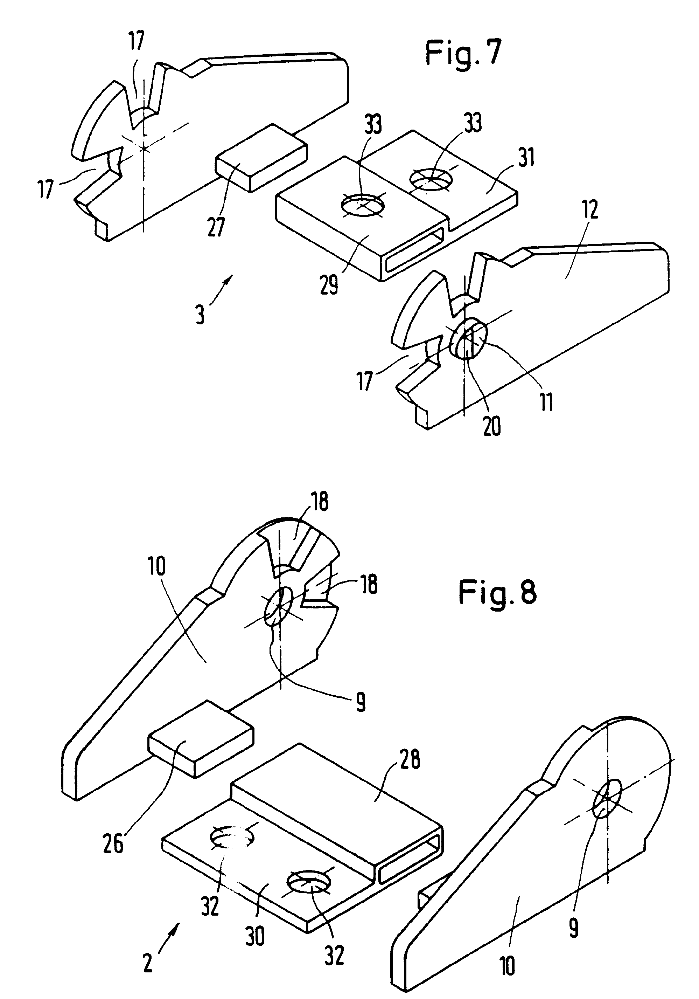

Die in der Fig. 1 dargestellte Energieführungskette ist aus mehreren Kettengliedern 1 mit einem Anschlußstück 2 für einen beweglichen Verbraucher und einem Anschlußstück 3 für einen ortsfesten Anschluß aufgebaut. Jedes Kettenglied 1 ist an enger zusammenliegenden Enden 4 seiner Außenlaschen 5 mit Zapfen 6 versehen, während die weiter auseinanderliegenden Enden 7 seiner Außenlaschen 5 entsprechende Bohrungen 8 aufweisen. Jedes Kettenglied 1 greift mit Zapfen 6 in Bohrungen 8 eines benachbarten Kettengliedes ein oder in entsprechende Bohrungen 9 der Außenlaschen 10 des Anschlußstückes 2 (vgl. Fig. 8). Das Anschlußstück für den ortsfesten Verbraucher 3 weist entsprechende Zapfen 11 an Außenlaschen 12 auf (vgl. Fig. 7), die in entsprechende Bohrungen 8 des benachbarten Kettengliedes 1 eingreifen.

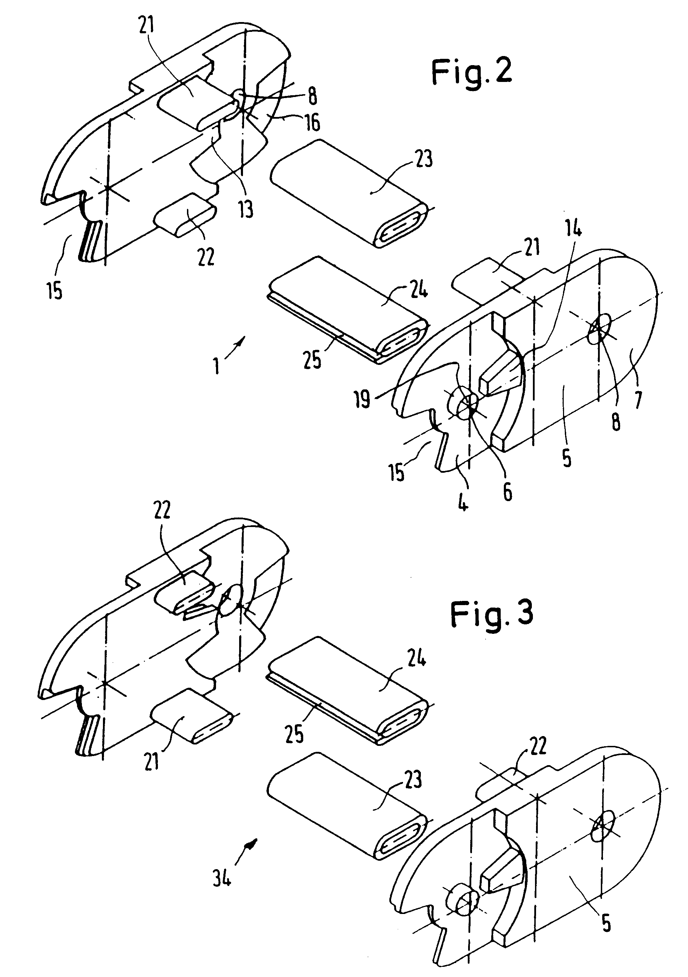

An den Außenseiten der zusammenliegenden Enden 4 und an den Innenseiten der auseinanderliegenden Enden 7 der Außenlaschen 5 sind ferner Anschläge 13,14 (vgl. Fig. 2) vorgesehen, die radial zu den Achsen der Bohrungen 8 bzw. der Zapfen 6 verlaufende Anschlagkanten haben. Die Anschläge 13 an den weiter auseinanderliegenden Enden 7 arbeiten mit den radial zu den Zapfen 6 verlaufenden Begrenzungswänden von Einschnitten 15 an den enger zusammenliegenden Enden 4 der Außenlaschen 5 zusammen, wogegen die Anschläge 14 mit den radial zu den Bohrungen 8 verlaufenden Begrenzungswänden von Ausnehmungen 16 an den Innenwänden der weiter auseinanderliegenden Enden 7 der Außenlaschen 5 zusammenwirken. Wie in der Fig. 1 gezeigt ist, erreicht jedes Kettenglied 1 beim Abwinkeln der Energieführungskette gegenüber dem benachbarten Kettenglied 1 einen bestimmten Schwenkwinkel, bei dem die Begrenzungswände der Anschläge 13 großflächig an den Begrenzungswänden der Einschnitte 15 anliegen, wodurch bereits ein weiteres Abwinkeln verhindert wird. Durch das - nicht dargestellte - Anliegen auch der Begrenzungswände der Anschläge 14 an den Begrenzungswänden der Ausnehmungen 16 bei dem gleichen Schwenkwinkel wird die Kraftübertragung zwischen den benachbarten Kettengliedern verbessert. Wenn sich die Energieführungskette in ihrer gestreckten Lage befindet, liegen dagegen die Anschläge 13,14 mit ihren anderen Begrenzungswänden an den anderen Begrenzungswänden der Einschnitte 15 bzw. Ausnehmungen 16 an. Dieser Zustand ist bei den unteren beiden Kettengliedern der in der Fig. 1 dargestellten Energieführungskette erreicht.

Wie aus den Fig. 1 und 7 ersichtlich ist, weisen die Anschlußstücke 3 Einschnitte 17 auf, deren radial zu den Zapfen 11 verlaufenden Begrenzungswände einen Winkelabstand voneinander haben, der den Winkelabstand der radialen Begrenzungswände der Anschläge 13 entspricht. Hierdurch wird ein Abwinkeln des angrenzenden Kettengliedes 1 gegenüber dem Anschlußstück 3 verhindert. Die beiden um 90° versetzten Einschnitte 17 ermöglichen eine um einen Winkel von 90° versetzte Montage des Anschlußstückes 3 an einem ortsfesten Anschluß. Durch die symmetrische Ausbildung des Anschlußstückes 3 kann dieses außerdem bei jeder Winkelstellung so gedreht werden, daß jede seiner Außenlaschen 12 mit einer anderen Außenlasche 5 der angrenzenden Kettenglieder zusammenarbeitet, wodurch eine erhebliche Variabilität bezüglich seiner Anbringung erreicht wird.

Gleiches gilt für das Anschlußstück 2, welches gemäß Fig. 8 zwei um 90° versetzte Ausnehmungen 18 mit radial zu seinen Bohrungen 9 verlaufenden Begrenzungswänden hat. Der Winkelabstand der Begrenzungswände und Ausnehmungen 18 stimmt wiederum mit dem Winkelabstand der radialen Begrenzungswände der Anschläge 14 der Kettenglieder 1 überein, so daß bei jeder Montageanordnung des Kettengliedes 1 an den Anschlußstücken 2 eine gegenseitige Schwenkbeweglichkeit verhindert wird. Wiederum kann das Anschlußstück 2 auf vier verschiedene Weisen zu dem Kettenglied 1 montiert werden, so daß eine erhebliche Variabilität bezüglich der Anbringung des Anschlußstückes 2 an einem beweglichen Verbraucher erreicht wird.

Es ist noch anzumerken, daß sämtliche Zapfen 6,11 eine Anschrägung 19,20 aufweisen, so daß sie leicht in die Bohrungen 8,9 der angrenzenden Kettenglieder 1 bzw. des Anschlußstückes 2 eingerückt werden können, wobei lediglich ein Steg zwischen den Ausnehmungen 16,18 und den Bohrungen 8,9 zu überwinden ist, der noch dazu in Einschieberichtung angeschrägt sein kann.

Wie aus den Fig. 1 und 2 ersichtlich ist, weisen die Außenlaschen 5 an den beiden Rändern ihrer Innenwand jeweils einen langen Vorsprung 21 und einen kurzen Vorsprung 22 auf. Auf die einteilig angespritzten Vorsprünge 21,22 sind ungeschlitzte Rohrstücke 23 und Rohrstücke 24 mit einem Längsschlitz 25 an einer abgerundeten Außenseite aufgesteckt, wobei den ungeschlitzten Rohrstücken 23 die langen Vorsprünge 21 zugeordnet sind. Da die Rohrstücke 23,24 an den Vorsprüngen 21,22 einen Preßsitz aufweisen, bilden diese die Kettenlaschen 5 fest miteinander verbindende Stege. Der Längsschlitz 25 des Rohrstückes 24 erlaubt jedoch ein einseitiges Öffnen der Energieführungskette zum Einlegen von Energieleitern, indem das Rohrstück 24 an dem Längsschlitz 25 aufgeweitet und über die Flachseiten der kurzen Vorsprünge 22 gedrückt wird. Durch das Ausbilden der Rohrstücke 23,24 mit zwei abgeflachten Außenseiten in relativ geringem gegenseitigen Abstand und mit zwei abgerundeten Außenseiten in relativ großem gegenseitigen Abstand wird eine hohe Stabilität der Konstruktion bei relativ großen Innenräumen für das Verlegen der Energieleitungen erreicht.

Wie der Fig. 1 in Verbindung mit den Fig. 7 und 8 entnehmbar ist, weisen auch die Anschlußstücke 2,3 im Randbereich ihrer Außenlaschen 10,11 jeweils einen Vorsprung 26,27 auf. Die Vorsprünge 26,27 gehen eine Preßverbindung mit Rohrstücken 28,29 ein, die jeweils Befestigungsfahnen 30,31 und Bohrungen 32,33 für das Anbringen an einem beweglichen Verbraucher oder einem ortsfesten Anschluß haben. Die Rohrstücke 29,30 sind ungeschlitzt, da sie eine stabile Verbindung zwischen den Außenlaschen 10 bzw. 12 herstellen müssen und aufgrund der nur einseitig an den Anschlußstücken 2,3 angebrachten Rohrstücke 28,29 Energieleitungen unbehindert eingeführt werden können.

Bei dem in der Fig. 3 dargestellten Kettenglied 34 sind die kurzen Vorsprünge 22 und die zugeordneten längsgeschlitzten Rohrstücke 24 im Unterschied zu dem Kettenglied 1 gemäß Fig. 2 am oberen Rand der Kettenlaschen 5 angeordnet. Hingegen befinden sich die langen Vorsprünge 21 und zugeordneten ungeschlitzten Rohrstücke 23 am unteren Rand der Kettenlaschen 5. Hierdurch werden die Innenräume der Energieführungskette für das Einführen von Energieleitungen von der anderen Seite zugänglich gemacht.

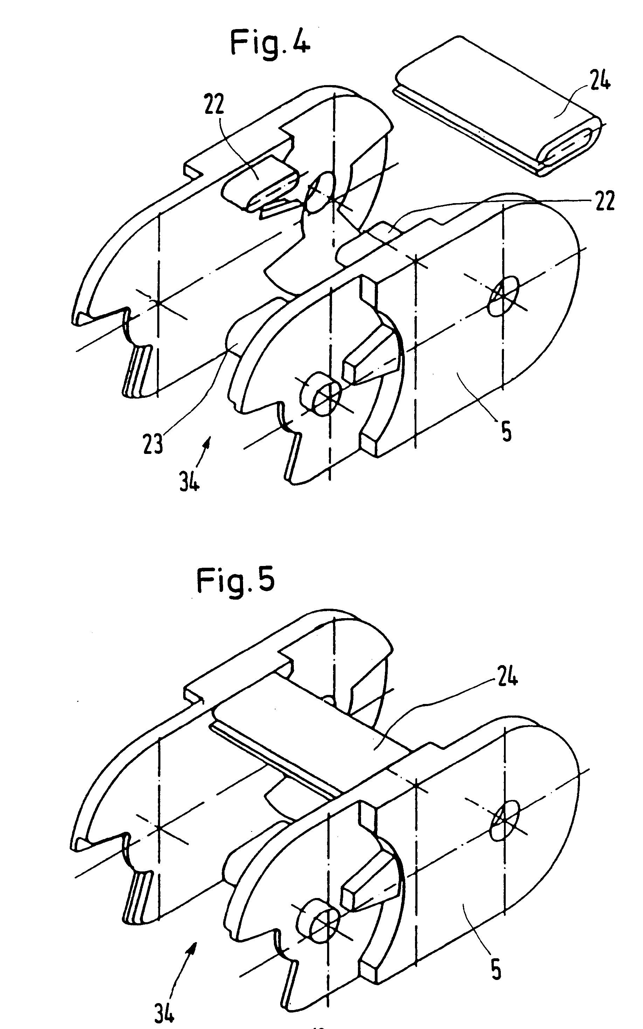

Wie in den Fig. 4 und 5 dargestellt ist, werden die Kettenglieder 34 zunächst vormontiert, indem die ungeschlitzten Rohrstücke 23 auf die langen Vorsprünge aufgepreßt werden, wodurch bereits ein stabiles Kettenglied entsteht. Dann können Energieleitungen durch den großen Freiraum zwischen den kurzen Vorsprüngen 22 eingeführt werden. Schließlich wird das Kettenglied 34 durch Aufschieben des geschlitzten Rohrstückes 24 in Längsrichtung der Energieführungskette auf die kurzen Vorsprünge 22 geschlossen.

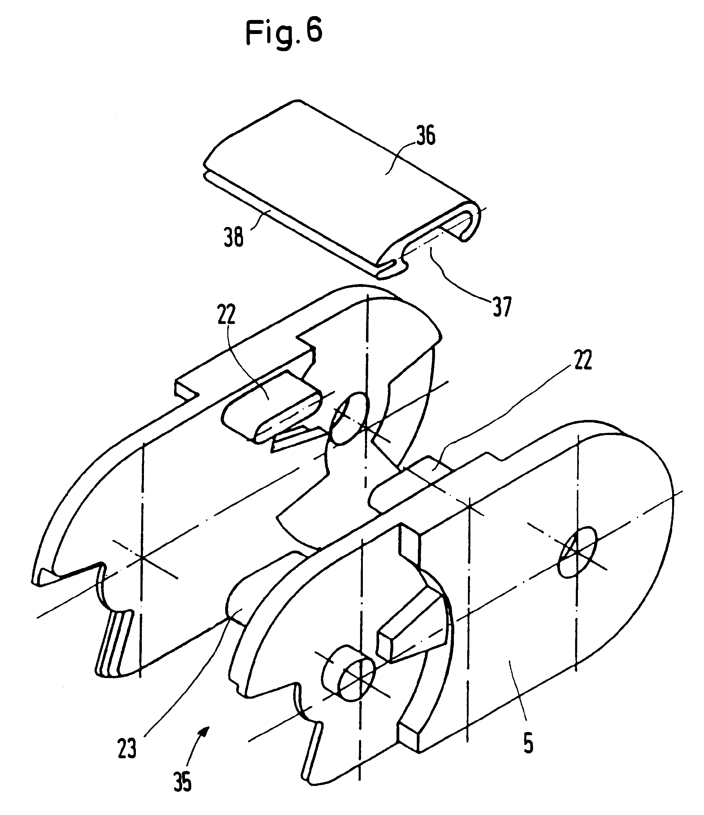

Die Fig. 6 zeigt ein ähnliches Kettenglied 35, dessen längsgeschlitztes Rohrstück 36 im Unterschied mit dem längsgeschlitzten Rohrstück 24 des Kettengliedes 34 einen Längsschlitz 37 aufweist, der etwa eine gesamte abgeflachte Außenseite einnimmt. An diesem Längsschlitz 37 ist das Rohrstück 36 leicht auf die kurzen Vorsprünge 22 der Kettenlaschen 5 aufsteckbar. Zum Lösen der Rohrstücke 36 weisen diese eine Längsnut 38 auf, in die die Klinge eines Schraubendrehers zum Abhebeln des Rohrstückes 36 eingesetzt werden kann.

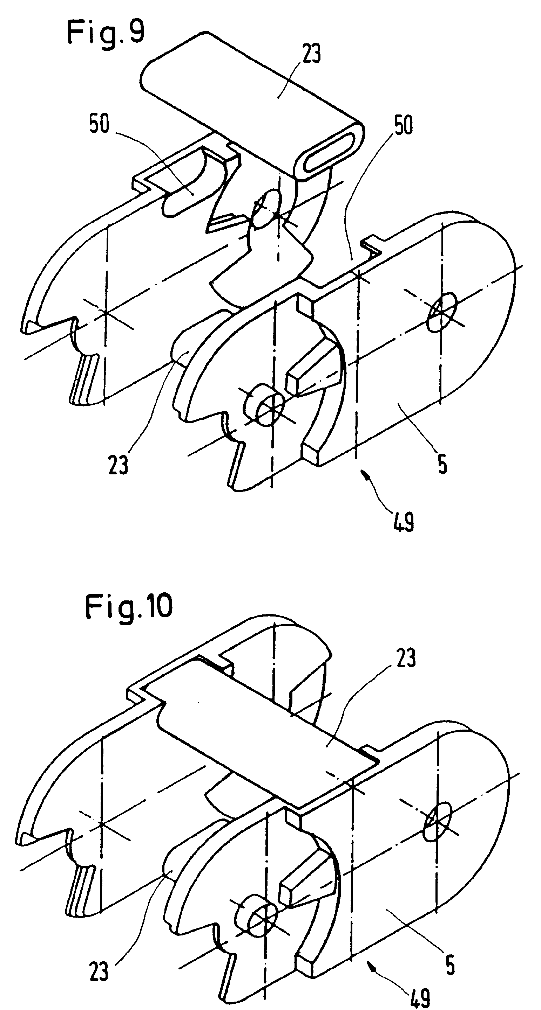

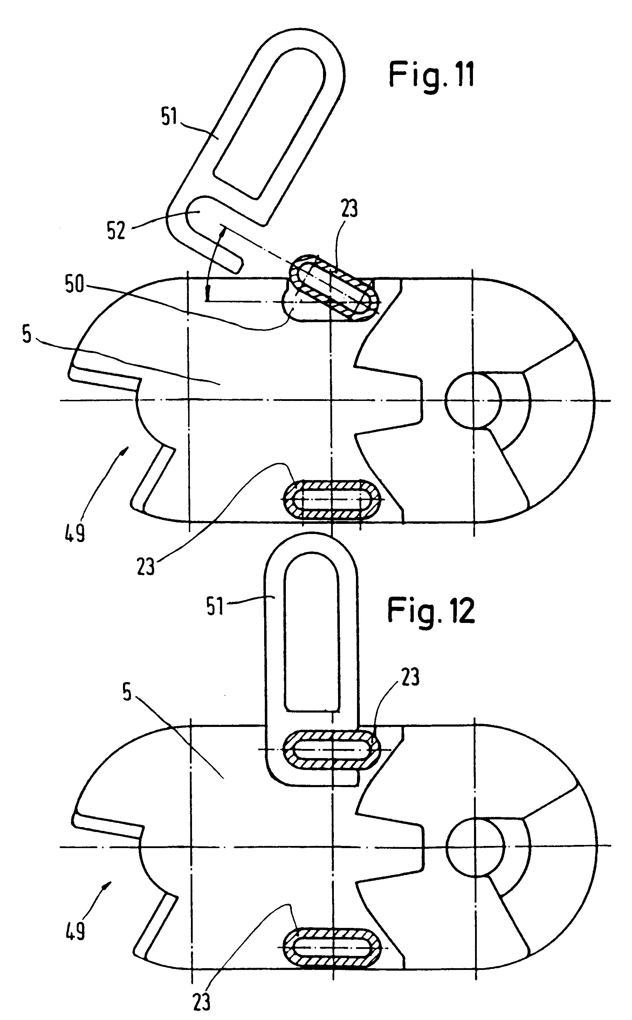

In den Fig. 9 bis 12 ist eine alternative Ausführungsform der Energieführungskette mit einem Kettenglied 49 dargestellt, dessen Außenlaschen 5 an ihrer Oberseite mit Ausnehmungen 50 versehen ist, in die ein Rohrstück 23 kraft- und formschlüssig eingesetzt werden kann. Zu diesem Zweck sind die Ausnehmungen 50 angeschnitten oder nach oben hin offen und mit Hinterschneidungen versehen, in welche die abgerundeten Schmalseiten der Rohrstücke 23 hineinpassen. Das Montieren und Demontieren der Rohrstücke 23 erfolgt am besten mit einem Werkzeug 51, dessen offenes Maul 52 auf das Profil des Rohrstückes 23 passt. Bei dieser Ausführungsform der Energieführungskette können die Kettenglieder 49 an einer Seite schnell geöffnet werden, um defekte Energieleitungen aus der Energieführungskette herauszunehmen oder neue Energieleitungen einzulegen.

Sämtliche Einzelteile der Energieführungskette können aus einem geeigneten Kunststoff oder aus einem Metall, insbesondere Leichtmetall bestehen.

## B e z u g s z e i c h e n l i s t e

| | | | | |
|---|---|---|---|---|
| 1 | Kettenglied | | 22 | Vorsprung (kurzer) |
| 2 | Anschlußstück | | 23 | Rohrstück |
| 3 | Anschlußstück | | 24 | Rohrstück |
| 4 | Ende | | 25 | Längsschlitz |
| 5 | Außenlasche | | 26 | Vorsprung |
| 6 | Zapfen | | 27 | Vorsprung |
| 7 | Ende | | 28 | Rohrstück |
| 8 | Bohrung | | 29 | Rohrstück |
| 9 | Bohrung | | 30 | Befestigungsfahne |
| 10 | Außenlasche | | 31 | Befestigungsfahne |
| 11 | Zapfen | | 32 | Bohrung |
| 12 | Außenlasche | | 33 | Bohrung |
| 13 | Anschlag | | 34 | Kettenglied |
| 14 | Anschlag | | 35 | Kettenglied |
| 15 | Einschnitt | | 36 | Rohrstück |
| 16 | Ausnehmung | | 37 | Längsschlitz |
| 17 | Einschnitt | | 38 | Längsnut |
| 18 | Ausnehmung | | 49 | Kettenglied |
| 19 | Anschrägung | | 50 | Ausnehmungen |
| 20 | Anschrägung | | 51 | Werkzeug |
| 21 | Vorsprung (langer) | | | |

**Patentansprüche**

1.  Energieführungskette für die Zufuhr von Verbrauchsmitteln aller Art zu auf Bahnen bewegten Aggregaten, wobei eine tragende Gliederkette aus einer Vielzahl von Kettengliedern (1,34,35) durchgehende Innenräume für Energieleiter aufweist, gelenkig miteinander verbundene Außenlaschen (5) der Gliederkette Anschläge (13,14) zur Begrenzung des gegenseitigen Schwenkwinkels haben und jedes Kettenglied (1,34,35) zwei lösbare, die Außenlaschen (5) miteinander verbindende als Rohrstücke ausgebildete Stege aufweist,
    **dadurch gekennzeichnet,**
    daß die Stege Rohrstücke (23,24,36) sind, von denen wenigstens eines mit seinen stirnseitigen Öffnungen unter Ausbildung von Preßsitzen auf entsprechende Vorsprünge (21,22) der Außenlaschen (5) gesteckt ist.

2.  Energieführungskette nach Anspruch 1, dadurch gekennzeichnet, daß die Rohrstücke (23,24,36) bei etwa konstanter Wandstärke an zwei gegenüberliegenden Außenseiten abgeflacht und an zwei weiteren gegenüberliegenden Außenseiten abgerundet sind, wobei der Abstand zwischen den abgeflachten Außenseiten kleiner als der Abstand zwischen den abgerundeten Außenseiten ist und daß die entsprechenden Vorsprünge (21,22) mit ihren abgeflachten Seiten parallel zu den Längsschmalseiten der Außenlaschen (5) angeordnet sind.

3. Energieführungskette nach einem der Ansprüche 1 bis 2, dadurch gekennzeichnet, daß jedes Kettenglied (1,34,35) ein Rohrstück (24,36) mit einem Längsschlitz (25,37) und ein ungeschlitztes Rohrstück (23) aufweist, wobei die längsgeschlitzten Rohrstücke (24,36) sämtlicher Kettenglieder auf nur einer Seite der Gliederkette angeordnet sind.

4. Energieführungskette nach Anspruch 3, dadurch gekennzeichnet, daß der Längsschlitz (25) an einer abgerundeten Außenseite des Rohrstückes (24) ausgebildet ist.

5. Energieführungskette nach Anspruch 3, dadurch gekennzeichnet, daß der Längsschlitz (37) an einer abgeflachten Außenseite des Rohrstückes (36) angeordnet ist und etwa deren Ausdehnung in Längsrichtung der Gliederkette aufweist.

6. Energieführungskette nach Anspruch 5, dadurch gekennzeichnet, daß eine abgerundete Außenseite des Rohrstückes (36) eine Längsnut (38) aufweist.

7. Energieführungskette nach einem der Ansprüche 3 bis 6, dadurch gekennzeichnet, daß die den längsgeschlitzten Rohrstücken (24,36) zugeordneten Vorsprünge (22) der Außenlaschen (5) kürzer als die den ungeschlitzten Rohrstücken (23) zugeordneten Vorsprünge (21) sind.

8. Energieführungskette nach einem der Ansprüche 1 bis 7, dadurch gekennzeichnet, daß die die Anschlußstücke (2,3) bildenden Endglieder der Gliederkette ein die Außenlaschen (10,12) verbindendes Rohrstück (28,29) aufweisen, welches eine Befestigungsfahne (30,31) für eine Befestigung an einen ortsfesten Anschluß oder an einem beweglichen Verbraucher hat.

9. Energieführungskette nach einem der Ansprüche 1 bis 8, dadurch gekennzeichnet, daß die Rohrstücke (23,24,28,29,36) aus einem Leichtmetall bestehen.

10. Energieführungskette nach den Ansprüchen 1 und 2, dadurch gekennzeichnet, daß einer der beiden als Rohrstück (23) ausgebildeten Stege in mit Hinterschneidungen versehene, angeschnittene Ausnehmungen (50) der Außenlaschen (5) eingesetzt sind.

11. Energieführungskette nach Anspruch 10, dadurch gekennzeichnet, daß die Rohrstücke (23) nach dem Einlegen in die Ausnehmungen (50) durch Verdrehen um ihre Längsachse kraft- und formschlüssig mit den Außenlaschen (5) verspannbar sind.

## Claims

1. Energy-carrying chain for the supply of means of consumption of all kinds to units moved on tracks, a supporting link chain which consists of a plurality of chain links (1, 34, 35) possessing continuous inner spaces for energy conductors, outer plates (5) of the link chain which are connected to one another in an articulated manner having stops (13, 14) for limiting the mutual pivot angle, and each chain link (1, 34, 35) possessing two releasable webs connecting the outer plates (5) to one another and designed as tubular pieces, characterised in that the webs are tubular pieces (23, 24, 36), at least one of which is slipped with its end orifices onto corresponding projections (21, 22) of the outer plates (5) to form press fits.

2. Energy-carrying chain according to Claim 1, characterised in that the tubular pieces (23, 24, 36), whilst having an approximately constant wall thickness are flattened on two mutually opposite outer sides and are rounded on two further mutually opposite outer sides, the distance between the flattened outer sides being smaller than the distance between the rounded outer sides, and in that the corresponding projections (21, 22) are arranged with their flattened sides parallel to the longitudinal narrow sides of the outer plates (5).

3. Energy-carrying chain according to one of Claims 1 and 2, characterised in that each chain link (1, 34, 35) possesses a tubular piece (24, 36) with a longitudinal slot (25, 37) and a non-slotted tubular piece (23), the longitudinally slotted tubular pieces (24, 36) of all the chain links being arranged on only one side of the link chain.

4. Energy-carrying chain according to Claim 3, characterised in that the longitudinal slot (25) is formed on a rounded outer side of the tubular piece (24).

5. Energy-carrying chain according to Claim 3, characterised in that the longitudinal slot (37) is arranged on a flattened outer side of the tubular piece (36) and possesses approximately the extension of said outer side in the longitudinal direction of the link chain.

6. Energy-carrying chain according to Claim 5, characterised in that one rounded outer side of the tubular piece (36) possesses a longitudinal groove (38).

7. Energy-carrying chain according to one of Claims 3 to 6, characterised in that the projections (22) of the outer plates (5) assigned to the longitudinally slotted tubular pieces (24, 36) are shorter than the projections (21) assigned to the non-slotted tubular pieces (23).

8. Energy-carrying chain according to one of Claims 1 to 7, characterised in that the end links of the link chain which form the connection pieces (2, 3) possess a tubular piece (28, 29) which connects the outer plates (10, 12) and which has a fastening lug (30, 31) for fastening to affixed connection or to a movable consumer.

9. Energy-carrying chain according to one of Claims 1 to 8, characterised in that the tubular pieces (23, 24, 28, 29, 36) consist of a light metal.

10. Energy-carrying chain according to Claims 1 and 2, characterised in that one of the two webs designed as a tubular piece (23) is inserted into indented recesses (50), provided with undercuts, of the outer plates (5).

11. Energy-carrying chain according to Claim 10, characterised in that the tubular pieces (23), after being inserted into the recesses (50), can be braced non-positively and positively with the outer plates (5) by being rotated about their longitudinal axis.

## Revendications

1. Chaîne de guidage pour la transmission d'énergie destinée à amener des agents consommables de tous types, à des appareils déplacés sur des voies de déplacement, une chaîne porteuse à maillons, constituée d'un grand nombre de maillons de chaîne (1, 34, 35), présentant des espaces intérieurs continus pour des lignes de transport d'énergie, des joues extérieures (5) de la chaîne à maillons, reliées entre-elles de manière articulée, présentant des butées (13, 14) pour limiter l'angle de débattement réciproque, et chaque maillon de chaîne (1, 34, 35) comportent deux entretoises amovibles, sous forme de pièces tubulaires, qui relient entre-elles les joues extérieures (5), caractérisée en ce que les entretoises sont des pièces tubulaires (23, 24, 36), dont l'une au moins est emmanchée par ses ouvertures frontales, selon des ajustements serrés, sur des protubérances (21, 22) correspondantes des joues extérieures (5).

2. Chaîne de guidage pour la transmission d'énergie selon la revendication 1, caractérisée en ce que les pièces tubulaires (23, 24, 36), tout en présentant une épaisseur de paroi sensiblement constante, sont aplaties sur deux côtés extérieurs opposés, et sont arrondis sur deux autres côtés extérieurs opposés, la distance entre les deux côtés extérieurs aplatis étant inférieure à la distance entre les deux côtés extérieurs arrondis, et en ce que les protubérances (21, 22) correspondantes sont disposées de manière à ce que leurs côtés aplatis s'étendent parallèlement aux côtés étroits longitudinaux des joues extérieures (5).

3. Chaîne de guidage pour la transmission d'énergie selon l'une des revendications 1 à 2, caractérisée en ce que chaque maillon de chaîne (1, 34, 35) comporte une pièce tubulaire (24, 36) présentant une fente longitudinale (25, 37) et une pièce tubulaire (23) non fendue, les pièces tubulaires (24, 36) fendues longitudinalement de l'ensemble des maillons de chaîne étant disposées sur un seul côté de la chaîne à maillons.

4. Chaîne de guidage pour la transmission d'énergie selon la revendication 3, caractérisée en ce que la fente longitudinale (25) est réalisée sur un côté extérieur arrondi de la pièce tubulaire (24).

5. Chaîne de guidage pour la transmission d'énergie selon la revendication 3, caractérisée en ce que la fente longitudinale (37) est réalisée sur un côté extérieur aplati de la pièce tubulaire (36), et présente environ la même étendue que ce côté, dans la direction longitudinale de la chaîne à maillons.

6. Chaîne de guidage pour la transmission d'énergie selon la revendication 3, caractérisée en ce qu'un côté extérieur arrondi de la pièce tubulaire (36) comporte une rainure longitudinale (36).

7. Chaîne de guidage pour la transmission d'énergie selon l'une des revendications 3 à 6, caractérisée en ce que les protubérances (22) des joues extérieures (5), associées aux pièces tubulaires (24, 36) fendues longitudinalement, sont plus courtes que les protubérances (21) associées aux pièces tubulaires (23) non fendues.

8. Chaîne de guidage pour la transmission d'énergie selon l'une des revendications 1 à 7, caractérisée en ce que les maillons d'extrémité de la chaîne à maillons, qui forment les pièces de raccordement (2, 3), comportent une pièce tubulaire (28, 29) reliant entre-elles les joues extérieures (10, 12) et possédant un talon de fixation (30, 31) destiné à être fixé à un élément de branchement en position fixe ou à un récepteur mobile.

9. Chaîne de guidage pour la transmission d'énergie selon l'une des revendications 1 à 8, caractérisée en ce que les pièces tubulaires (23, 24, 28, 29, 36) sont réalisées en un métal léger.

10. Chaîne de guidage pour la transmission d'énergie selon les revendications 1 et 2, caractérisée en ce que l'une des deux entretoises réalisées sous forme de pièce tubulaire (23) est insérée dans des évidements (50) des joues extérieures (5), ouverts latéralement et pourvus de contre-dépouilles.

11. Chaîne de guidage pour la transmission d'énergie selon la revendication 10, caractérisée en ce que les pièces tubulaires (23), après avoir été déposées dans les évidements (50), peuvent être serrées par adhérence et complémentarité de forme dans les joues extérieures (5), en les tournant autour de leur axe longitudinal.

Fig.1

# Fig.2

# Fig.3

Fig.4

Fig.5

# Fig.6

Fig. 7

17
17
17
27
3
33
33
31
29
12
17
20
11

Fig. 8

18
10
18
9
26
28
10
9
32
2
30
32

**Fig. 9**

**Fig. 10**

Fig. 11

Fig. 12

16